# EUROPÄISCHE PATENTSCHRIFT

(11) **EP 2 907 386 B1**
(45) Veröffentlichungstag und Bekanntmachung des Hinweises auf die Patenterteilung: **04.12.2019**
(21) Anmeldenummer: 15401004.5
(22) Anmeldetag: 13.02.2015
(51) Int. Cl.: A01M 7/00

(54) **Flüssigkeits-Fördersystem**
Fluid conveying system
Système de transport de liquide

(30) Priorität: 17.02.2014 DE 102014101933
(43) Veröffentlichungstag der Anmeldung: 19.08.2015
(73) Patentinhaber: Amazonen-Werke H. Dreyer GmbH & Co. KG, 49205 Hasbergen (DE)
(72) Erfinder: Schürmann, Lars, 49545 Tecklenburg (DE)

(56) Entgegenhaltungen:
- EP-A1- 1 444 893
- EP-A2- 1 958 506
- EP-A2- 2 223 594
- EP-A2- 2 789 232
- DD-A1- 202 752

## Beschreibung

Die Erfindung betrifft ein Flüssigkeits-Fördersystem, insbesondere für eine Feldspritze, gemäß Oberbegriff des Patentanspruches 1.

Bei einem aus EP 1 958 506 A bekannten Flüssigkeits-Fördersystem wird nach Entlüften der Kreiselpumpe durch die selbstansaugende Pumpe mit Betrieb der Kreiselpumpe nur die Brühetank-Füllfunktion, insbesondere eine Schnell-Füllfunktion, ausgeführt. Die Sprühreinigungs-, Einspül-, Rühr- und die Entleerungsfunktionen werden hingegen mit der selbstansaugenden Pumpe über diese ausgeführt. Die Entlüftung der Kreiselpumpe erfolgt in einer Parallel-Leitungsschleife einer an den Klarwasser-Sauganschluss angeschlossenen Füllleitung von der Saugseite der Kreiselpumpe her. Die selbstansaugende Pumpe ist eine Membranpumpe. Um eine für die Mehrzahl der Grundfunktionen ausreichende Förderleistung und Standfestigkeit der Membranpumpe sicherzustellen, benötigt diese erhebliche Baugröße, wodurch sie teuer und schwer ist. Selbst wenn die selbstansaugende Pumpe während der Schnell-Füllfunktion für den Brühetank bei Betrieb der entlüfteten Kreiselpumpe in Betrieb sein sollte, lässt die Füllkapazität bzw. Füllleistung zu wünschen übrig, da der Förderstrom der Kreiselpumpe ein druckabhängig ansprechendes Ventil an der Druckseite der Membranpumpe geschlossen hält, und diese allenfalls über Reinigungsdüsen Flüssigkeit in den Brühetank sprühen kann. Aufgrund des erheblichen Durchflusswiderstandes der Düsen ist der Flüssigkeitsdurchsatz beschränkt, so dass die insgesamt erzielbare Füllleistung gemindert ist und die Befüllzeit zumindest des Brühetanks relativ lange ausfällt. Ferner wird die Kreiselpumpe nach der Entlüftung durch die Membranpumpe unmittelbar zur Ausführung der Schnell-Füllfunktion eingesetzt, wobei an der großquerschnittigen Saugseite und Druckseite der Kreiselpumpe Lufteinschlüsse vorhanden sein können, die die Füllkapazität der Kreiselpumpe mindern. Denn zum Entlüften der großquerschnittigen Saug- und Druckseiten der Kreiselpumpe und der Kreiselpumpe selbst reicht gegebenenfalls der Förderstrom der Membranpumpe nicht aus, deren Förderstrom deutlich geringer ist als der Förderstrom der entlüfteten Kreiselpumpe.

In DE 10 2013 103 620.1 mit älterem Zeitrang wird vorgeschlagen, in einem ähnlichen Flüssigkeits-Fördersystem Hauptfunktionen durch die entlüftete Kreiselpumpe auszuführen, nämlich die Füll-, die Einspül-, die Rühr- und die Sprühfunktionen, während die selbstansaugende Pumpe nur die Reinigungsfunktion und die Kreiselpumpen-Entlüftungsfunktion ausführt. Weiterer Stand der Technik ist enthalten in: DD 202 752 A1, EP 1 444 893 A1, und EP 2 223 594 A2.

Der Erfindung liegt die Aufgabe zugrunde, ein Flüssigkeits-Fördersystem der eingangs genannten Art hinsichtlich der Füllkapazität bzw. Füllleistung zu verbessern.

Die gestellte Aufgabe wird mit den Merkmalen des Patentanspruches 1 gelöst.

Da der selbstansaugenden Pumpe auch die Einspülfunktion zugewiesen ist, lässt sich bei gleichzeitigem Betrieb beider Pumpen während der Brühetank-Füllfunktion die Füllleistung steigern, da der Förderstrom der selbstansaugenden Pumpe entweder über die Einspülschleuse oder direkt über ein dann zu öffnendes Ventil ohne nennenswerten Drosselwiderstand in den Brühetank gelangt. Denn die Reinigungsfunktion wird im Betrieb der Kreiselpumpe von dieser gespeist, wobei der Drosselwiderstand bzw. das Druckgefälle über die Reinigungsdüsen keinen nachteiligen Einfluss mehr auf die vorhergehend genutzte Füllleistung hat. Ein zusätzlicher Vorteil ergibt sich dadurch, dass der Aufwand zum Anpassen der Software in der Steuerung gering bleibt, und bei der Sprühfunktion das schnelle Ansprechverhalten und ein hoher Sprühdruck der selbstansaugenden Pumpe nutzbar sind. Zumindest bei der Sprühfunktion werden beide Pumpen gleichzeitig betrieben, um die Flüssigkeit im Brühetank ständig zu rühren, wofür die Kreiselpumpe aufgrund ihrer hohen Förderkapazität einen wünschenswert starken Rührwerksvolumenstrom erzeugt.

Zweckmäßig wird die Rührfunktion mit Betrieb der Kreiselpumpe jeweils erst nach Abschluss der Füllfunktion ausgeführt. Die Rührfunktion mit dem von der Kreiselpumpe aufgebrachten starken Rührwerksvolumenstrom ist während der Sprühfunktion günstig, damit die versprühte Flüssigkeit dauerhaft eine möglichst gleichmäßige Zusammensetzung hat.

Zweckmäßig erfolgen die Füll- und Einspülfunktionen bei gleichzeitigem Betrieb beider Pumpen, eben um über die mit der selbstansaugenden Pumpe durchgeführte Einspülfunktion eine zusätzliche Flüssigkeitsmenge mit vernachlässigbarem Drosselwiderstand in den Brühetank zu bringen, während die Kreiselpumpe weiterhin füllt.

Zweckmäßig wird die Füllfunktion mit gleichzeitigem Betrieb beider Pumpen ausgeführt, um eine optimal große Füllleistung zu erzielen. Falls kein Wert auf optimal kurze Füllzeiten gelegt wird, kann die selbstansaugende Pumpe dann außer Betrieb gesetzt oder für eine andere Funktion benutzt werden. Ein gleichzeitiger Betrieb kann auch sicherstellen, dass selbst bei nennenswerter Saughöhe der Saugstrom nicht abreißt.

Zweckmäßig ist ferner, wenn die Reinigungsfunktion oder eine kontinuierliche Innenreinigung des Brühetanks und des Netzes mit Klarwasser nach Reinigen der Kreiselpumpe mit Klarwasser, vorzugsweise aus einem in das Netz integrierten, mit der Kreiselpumpe befüllbaren Klarwasser-Behälter, ausführbar ist, wobei auch die Rührfunktion mit Klarwasser ausführbar sein kann. Diese Reinigungsfunktion wird beispielsweise jeweils anschließend an die abgeschlossene Sprühfunktion durchgeführt.

Ferner ist es im Hinblick auf eine optimale Füllleistung zweckmäßig, wenn die Entlüftungsfunktion unterteilt ist. Ein anfänglicher Betrieb nur der selbstansaugenden Pumpe läuft bis Erreichen einer vorbestimmten Flüssigkeitsmenge im Brühetank ab. Erst nachfolgend mit gleichzeitigem Betrieb beider Pumpen erfolgt die vollständige Entlüftung eines Ansaugpfades der Kreiselpumpe mit Zirkulation der Flüssigkeit noch aus dem Brühetank durch die Kreiselpumpe über den Brühetank bei gegebenenfalls gleichzeitiger Ergänzung der Flüssigkeitsmenge im Brühetank aus dem Klarwasser-Sauganschluss durch die selbstansaugende Pumpe. Zunächst entlüftet also die allein betriebene selbstansaugende Pumpe vom Klarwasser-Sauganschluss über ein geöffnetes Ventil im Netz bis zum Brühebehälter den Ansaugpfad der Kreiselpumpe. Der Brühetank erhält dadurch auch eine entsprechende Flüssigkeitsmenge. Dabei drückt die selbstansaugende Pumpe Flüssigkeit von der Druckseite der noch nicht in Betrieb befindlichen Kreiselpumpe durch die Kreiselpumpe und entsprechend geschaltete Ventile ebenfalls in den Brühetank, so dass die Kreiselpumpe entlüftet wird und insgesamt die Flüssigkeitsmenge im Brühebehälter zunimmt. Erst anschließend, d.h., sobald eine ausreichende vorbestimmte Flüssigkeitsmenge im Brühebehälter vorhanden ist, wird der Betrieb auch der Kreiselpumpe aufgenommen. Die Kreiselpumpe saugt dann Flüssigkeit aus dem Brühebehälter und zirkuliert diese wieder zurück in den Brühebehälter, um die relativ großquerschnittigen Bereiche an der Druckseite, in der Kreiselpumpe und an der Saugseite der Kreiselpumpe vollständig zu entlüften und für die Kreiselpumpe eine gleichförmige Strömungssituation ohne Lufteinschlüsse herzustellen. Der gleichzeitige Betrieb der selbstansaugenden Pumpe hält ausgehend vom Klarwasser-Sauganschluss die Flüssigkeitssäule aufrecht und fördert weiterhin Flüssigkeit in den Brühebehälter. Auf diese Weise ist sichergestellt, dass bei der darauffolgenden Füllfunktion die volle Leistungsfähigkeit bzw. der volle Förderstrom der Kreiselpumpe nutzbar ist, weil aufgrund der gegenüber der Förderleistung der Kreiselpumpe deutlich geringeren Förderleistung der selbstansaugenden Pumpe eventuell zunächst noch vorhandene Lufteinschlüsse im Hydrauliksystem der Kreiselpumpe von der stärkeren Kreiselpumpe zuverlässig ausgetrieben sind.

Bei der selbstansaugenden Pumpe handelt es sich zweckmäßig um eine Kolbenmembranpumpe. Die Kolbenmembranpumpe kann so in das Leitungsnetz integriert sein, dass sie durch eine Umgehungsschleife mit einem druckvorgesteuerten Druckbegrenzungsventil umgangen wird. Das Druckbegrenzungsventil wird gegen, zweckmäßig eingestellte Federkraft, von der Druckseite der Kolbenmembranpumpe her druckvorgesteuert und begrenzt den Systemdruck an der Druckseite.

Bei einer zweckmäßigen Ausführungsform sind an den Druckseiten beider Pumpen in Netzzweigen zum Brühetank, zum Klarwasser-Behälter und zur Einspülschleuse zumindest fünf 2/2-Wegeventile vorgesehen, die entsprechend der gewünschten Funktionen schaltbar sind. Dabei kann zumindest für die Rührfunktion ein 2/2-Wege-Druckregelventil vorgesehen sein, das den Rührdruck bzw. den im Brühetank eingesetzten Rührvolumenstrom selbsttätig auf einen optimalen Wert regelt. Die Wegeventile bieten auch den Vorteil, schon über vorbestimmte Querschnitte bestimmte Mengen bzw. Strömungsraten zumindest zu beeinflussen, die für die jeweiligen Funktionen als zweckmäßig erachtet werden.

Bei einer weiteren Ausführungsform sind an den Saugseiten beider Pumpen in Netzzweigen zum Brühetank, zum Klarwasser-Behälter und zum Klarwasser-Sauganschluss zwei 2/3-Wegeventile und ein 2/2-Wegeventil vorgesehen, die für die jeweils gewünschten Funktionen entsprechend schaltbar sind und beispielsweise in ihren Durchgangsstellungen im Wesentlichen untereinander gleiche Durchströmquerschnitte und geringem Drosselwiderstand definieren.

Eine Ausführungsform des Erfindungsgegenstandes wird anhand der Zeichnungen erläutert. Es zeigen:
- Fig. 1: ein Blockschaltbild einer Ausführungsform eines Flüssigkeits-Fördersystems, beispielsweise einer Feldspritze, in drucklosem Zustand,
- Fig. 2: die Ausführungsform der Fig. 1 in einer ersten Phase einer Entlüftungsfunktion,
- Fig. 3: die Ausführungsform der Fig. 1 in einer zweiten Phase der Entlüftungsfunktion, und
- Fig. 4: die Ausführungsform der Fig. 1 in einer dritten Phase der Entlüftungsfunktion, wobei in den Figuren zum besseren Verständnis und Unterscheiden der Druck- und Saugseiten (unten bzw. oben) von Pumpen ein Brühetank und ein optionaler Klarwasser-Behälter zweifach gezeigt sind, obwohl das Flüssigkeits-Fördersystem nur einen Brühetank und einen Klarwasser-Behälter aufweist.

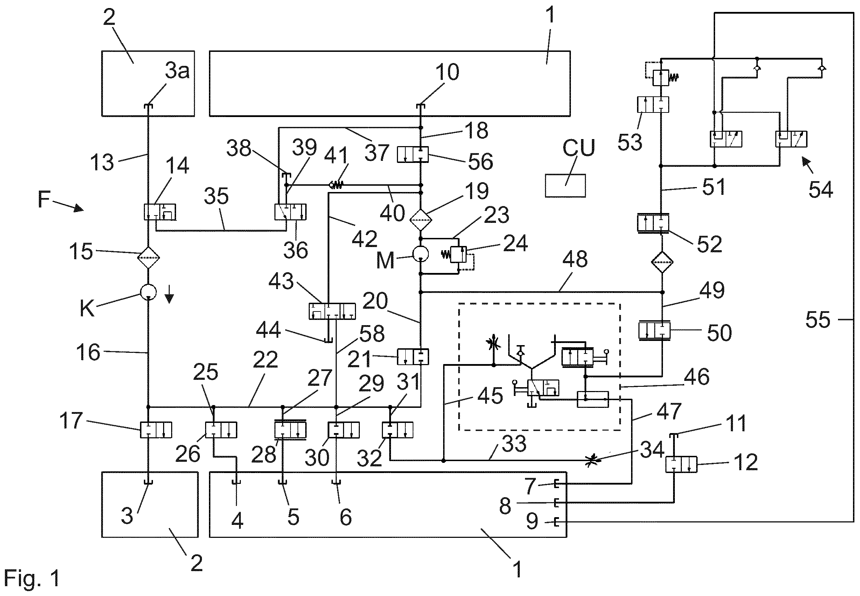

Ein in den Fig. 1 bis 4 als Blockschaltbild dargestelltes Flüssigkeits-Fördersystem F, beispielsweise einer Feldspritze (nicht gezeigt), weist einen Brühetank 1 und optional einen Klarwasser-Behälter 2 auf, wobei jedoch zur Verdeutlichung von Saug- und Druckseiten einer selbstansaugenden Pumpe M und einer nicht selbstansaugenden Kreiselpumpe K der Brühetank 1 und der Klarwasser-Behälter 2 (oben und unten) zweifach dargestellt sind.

Das Flüssigkeits-Fördersystem F weist als Hauptkomponenten eine nicht selbstansaugende Kreiselpumpe K und eine parallel geschaltete, selbstansaugende Pumpe M, beispielsweise eine Kolbenmembranpumpe, sowie einen Brühetank 1, einen Klarwasser-Behälter 2, eine Brühenzusatz-Einspülschleuse 46 sowie zumindest einen Sprühmodul 54 mit nicht näher hervorgehobenen Sprühdüsen auf, wie ein Klarwasser-Sauganschluss 38, optional ein Entleeranschluss 44 oder ein Anschluss 11 zum drucklosen externen Befüllen an ein Leitungsnetz angeschlossen sind.

Im Klarwasser-Behälter 2 ist ein Anschluss 3 vorgesehen, der wahlweise zum Einfüllen von Klarwasser oder (3a) zur Entnahme von Klarwasser nutzbar ist. Im Brühetank 1 sind, den Druckseiten beider Pumpen K, M zugeordnet, ein Reinigungsanschluss 4, ein Rühranschluss 5, ein Einfüllanschluss 6, ein Einspülanschluss 7, optional ein Einfüllanschluss 8 zum externen Befüllen, und ein Rückfuhranschluss 9 vorgesehen, sowie (oben gezeigt) ein Entnahmeanschluss 10. Dem Anschluss 11 zum drucklosen externen Befüllen ist ein 2/2-Wegeventil 12 zugeordnet. Ferner gehört zum Flüssigkeits-Fördersystem F eine elektronische Steuerung CU mit Hardware- und Software-Bestückung, die mit den diversen Ventilen und den Pumpen K, M im Leitungsnetz verbunden ist und unterschiedliche Funktionen steuern lässt.

Vom Anschluss 3 bzw. 3a (oben) erstreckt sich eine Leitung 13 über ein 3/2-Wegeventil 14 zu einem Saugfilter 15 und der Kreiselpumpe K, von der eine Leitung 16 zu einer Verknüpfungsleitung 22 der Druckseiten beider Pumpen K, M einerseits sowie durchgehend über ein 2/2-Wegeventil zum Anschluss 3 des Klarwasser-Behälters 2 verläuft.

Vom Entnahmeanschluss 10 im Brühetank 1 erstreckt sich eine Leitung 18 über ein 2/2-Wegeventil 56 zu einem Saugfilter 19 der selbstansaugenden Pumpe M, von der eine Leitung 20 über ein 2/2-Wegeventil 21 zur Verknüpfungsleitung 22 führt. Die selbstansaugende Pumpe M ist, optional, durch eine Umgehungsschleife 23 umgehbar, in der sich ein federbelastetes Druckbegrenzungsventil 24 befindet, das von der Druckseite der selbstansaugenden Pumpe M her druckvorgesteuert ist.

Von der Verknüpfungsleitung 22 zweigen Netzzweige 25, 27, 29, 31 zu den Anschlüssen 4, 5, 6 im Brühetank 1 sowie zu einem optionalen Außenreinigungsanschluss 34 ab. Im Netzzweig 25 ist ein 2/2-Wegeventil 26, im Netzzweig 27 ein 2/2-Wegeventil 28, vorzugsweise ein 2/2-Druckregelventil 28, im Netzzweig 29 ein 2/2-Wegeventil 30 und im Netzzweig 31 ein 2/2-Wegeventil 32 vorgesehen, wobei von letzterem eine Leitung 33 zum externen Außenreinigungsanschluss 34 führt. Von der Leitung 33 verläuft eine Leitung 45 in die Brühenzusatz-Einspülschleuse 46. Die erwähnten 2/2-Wegeventile haben unterschiedliche Durchgangsquerschnitte, wobei beispielsweise das 2/2-Wegeventil 30 den größten Durchgangsquerschnitt hat.

Vom 3/2-Wegeventil 14 zweigt eine Leitung 35 zu einem weiteren 3/2-Wegeventil 36 ab, von welchem eine Leitung 37 zur Leitung 18 sowie eine Leitung 39 zum Klarwasser-Sauganschluss 38 führen. Von der Leitung 39 zweigt eine Leitung 40 (Saugschlauch) zur Leitung 18 zwischen dem 2/2-Wegeventil 56 und dem Saugfilter 19 ab. In der Leitung 40 ist ein in Strömungsrichtung zur Leitung 39 sperrendes, federbelastetes Rückschlagventil 41 enthalten. Von der Leitung 18 zweigt ferner stromauf des Saugfilters 19 eine Leitung 42 zu einem 3/3-Wegeventil 43 ab, das ausgangsseitig an den Ablassanschluss 44 und über eine Leitung 58 an die Verknüpfungsleitung 22 angeschlossen ist.

Die Brühenzusatz-Einspülschleuse 46 ist von bekannter Bauart und über eine Leitung 47 mit dem Einspülanschluss 7 im Brühetank 1 verbunden, sowie über eine Leitung 49 mit einer von der Leitung 18 zwischen der selbstansaugenden Pumpe M und dem 2/2-Wegeventil 21 abzweigenden Leitung 48 zum Sprühmodul 54. In einer Leitung 51 zum Sprühmodul 54 sind hintereinander 2/2-Wegeventile 52, 53 enthalten. Aus dem Sprühmodul 54 führt eine Rückführleitung 55 zum Rückführanschluss 9 im Brühetank 1. Die Durchgangsquerschnitte der beiden 3/2-Wegeventile 14 und 36 und des 2/2-Wegeventils 56 sind z.B. untereinander gleich und größer als beispielsweise der Durchgangsquerschnitt des 2/2-Wegeventils 30.

Fig. 1 verdeutlicht den drucklosen Zustand des Flüssigkeits-Fördersystems F, wobei zumindest sämtliche 2/2-Wegeventile in ihren Absperrstellungen sind.

Über die Steuerung CU sind folgende Funktionen einstellbar: Im Betrieb der selbstansaugenden Pumpe M werden von dieser eine Sprüh- oder eine Einspülfunktion ausgeführt. Im Betrieb der Kreiselpumpe K werden von dieser wahlweise eine Rührfunktion oder Brühetank-Füllfunktion oder Klarwasserbehälter-Füllfunktion oder eine Schnellentleerungsfunktion oder eine Reinigungsfunktion ausgeführt. Dabei kann davon ausgegangen werden, dass zwar die selbstansaugende Pumpe M eine geringere Förderleistung hat als die Kreiselpumpe, jedoch höhere Drücke beispielsweise > 8 bar für die Sprühfunktion bereitzustellen vermag. Zumindest bei Ausführen der Sprühfunktion und der gleichzeitigen Rührfunktion werden zweckmäßig beide Pumpen K, M zeitgleich betrieben. Um nach Ausführen der Sprühfunktion das Leitungsnetz und den Brühetank 1 zu reinigen, oder eine kontinuierliche Innenreinigung zu betreiben, wird die Kreiselpumpe K zunächst mit Klarwasser aus dem Klarwasser-Behälter 2 gereinigt. Falls die kontinuierliche Innenreinigung mit Klarwasser durchgeführt wird, wird die Rührfunktion ebenfalls mit Klarwasser ausgeführt.

Um das Flüssigkeits-Fördersystem, beispielsweise in einer Feldspritze, betriebsbereit zu machen, ist zunächst die Füllfunktion (zumindest des Brühetanks 1 und gegebenenfalls des Klarwasser-Behälters 2) auszuführen.

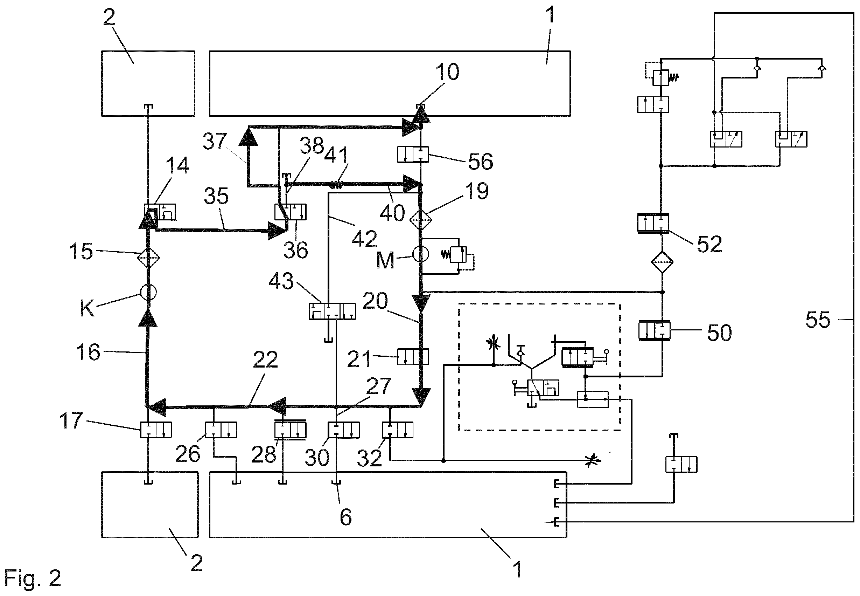

In einem ersten Schritt (Fig. 2) wird das 2/2-Wegeventil 30 auf Durchgang geschaltet, wird das 3/2-Wegeventil 14 aus der Stellung der Fig. 1 umgeschaltet, um die Leitung 16 mit der Leitung 35 zu verbinden, ist das 3/2-Wegeventil 36 in einer Stellung, in welcher die Leitung 39 abgesperrt und die Leitung 35 mit der Leitung 37 verbunden ist, und wird das 2/2-Wegeventil 21 auf Durchgang geschaltet, ehe die selbstansaugende Pumpe M in Betrieb genommen wird (erste Phase). Die Kreiselpumpe K ist noch außer Betrieb. Von der selbstansaugenden Pumpe M wird der Saugschlauch bzw. die Leitung 40 entlüftet, indem aus dem Klarwasser-Sauganschluss 38 Klarwasser angesaugt wird, das die selbstansaugende Pumpe M durch das 2/2-Wegeventil 21 und das 2/2-Wegeventil 30 durch den Einfüllanschluss 6 in den Brühetank 1 fördert. Gleichzeitig fördert die selbstansaugende Pumpe weiter über die Verknüpfungsleitung 22 und die Druckseite (Leitung 16) durch die Kreiselpumpe K und über das Ventil 14, die Leitung 35, das 3/2-Wegeventil 36 und die Leitung 37 durch den Entnahmeanschluss 10 in den Brühetank 1, wobei die Kreiselpumpe K entlüftet wird.

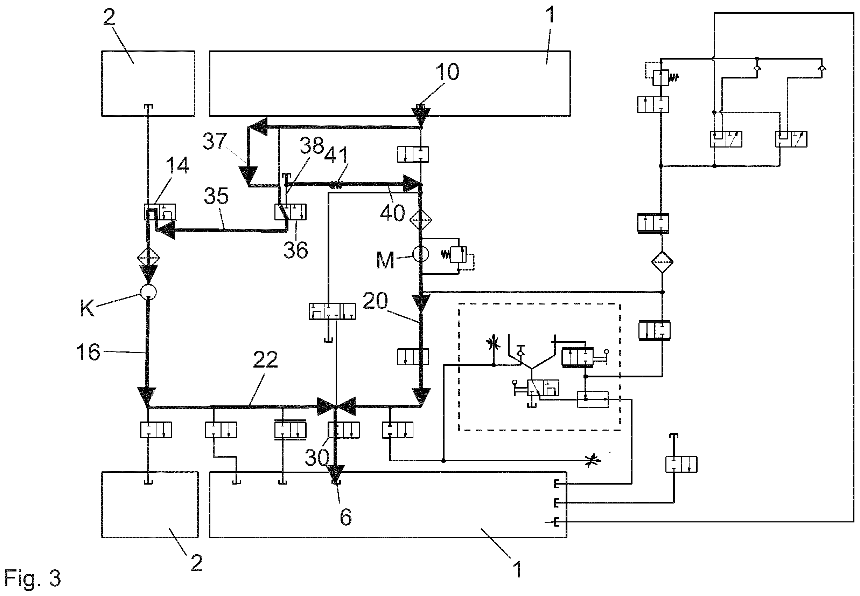

Die Kreiselpumpe K wird jedoch erst in Betrieb (zweite Phase) genommen, wenn eine vorbestimmte und ausreichende Flüssigkeitsmenge im Brühetank 1 vorhanden ist. Im Betrieb saugt dann die Kreiselpumpe K zunächst (Fig. 3) Flüssigkeit über den Entnahmeanschluss 10 aus dem Brühetank 1 und weiter über die Leitung 37, das 3/2-Wegeventil 36, die Leitung 35, das 3/2-Wegeventil 14 und drückt die angesaugte Flüssigkeitsmenge über die Leitung 16 und die Verknüpfungsleitung 22 sowie das 2/2-Wegeventil 30 über den Einfüllanschluss 6 in den Brühetank 1. Dieser Zirkulationskreislauf, veranlasst durch die Kreiselpumpe K, wird genutzt, um den gegebenenfalls relativ großquerschnittigen Ansaugpfad und die großquerschnittige Kreiselpumpe K vollständig zu entlüften, d.h. jegliche Lufteinschlüsse auszutreiben, die mit der geringeren Förderleistung der selbstansaugenden Pumpe gegebenenfalls nicht zuverlässig und/oder schnell genug auszutreiben sind. Die selbstansaugende Pumpe M wird im Übrigen parallel und zeitgleich mit der Kreiselpumpe K betrieben, um einerseits die Wassersäule im Saugschlauch (Leitung 40) aufrechtzuhalten und weiterhin Flüssigkeit in den Brühetank 1 zu fördern.

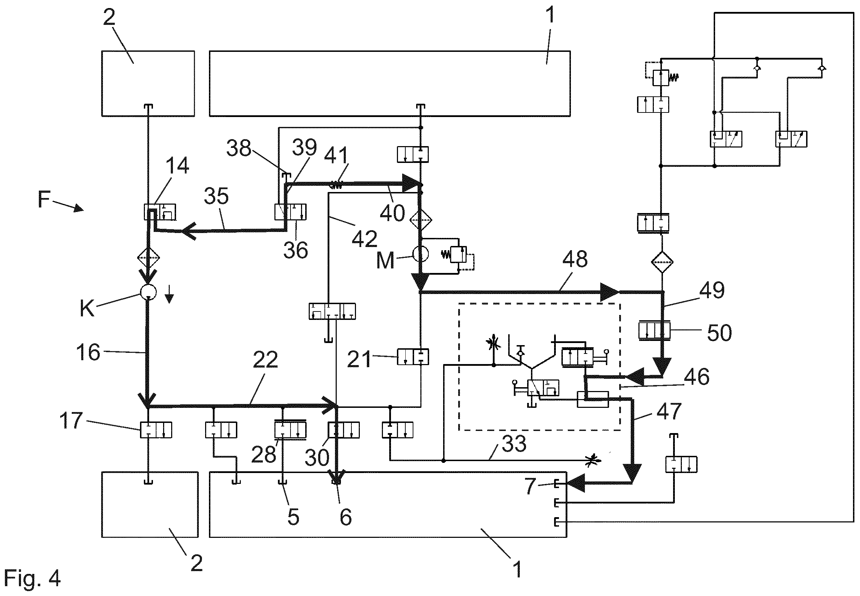

Erst nachdem der Ansaugpfad der Kreiselpumpe K und die Kreiselpumpe K zuverlässig entlüftet sind, wird (Fig. 4) die Saugquelle für die Kreiselpumpe K geändert (dritte Phase). Und zwar wird das 3/2-Wegeventil 36 umgeschaltet, um die Leitung 39 mit der Leitung 35 zu verbinden, so dass die Kreiselpumpe K nun wie auch die selbstansaugende Pumpe M über den Klarwasser-Sauganschluss 38 Klarwasser ansaugt. Dies ist dann eine Brühetank-Schnellfüllfunktion, bei der sowohl die selbstansaugende Pumpe M als auch die Kreiselpumpe K über den Füllanschluss 6 Flüssigkeit in den Brühetank 1 einspeisen. Um den Brühetank 1 möglichst schnell zu füllen, kann zusätzlich auch das 2/2-Wegeventil 28 zum Rühranschluss 5 auf Durchgang geschaltet werden. Falls der Klarwasser-Behälter 2 nicht ordnungsgemäß gefüllt sein sollte, kann ferner das 2/2-Wegeventil 17 alternativ oder additiv auf Durchgang geschaltet werden, um den Klarwasser-Behälter 2 zu füllen (nicht gezeigt).

In Fig. 4 ist angedeutet, dass die selbstansaugende Pumpe M über die Einspülschleuse 46 Flüssigkeit und Brühenzusatz in den Brühetank 1 einspeist, wofür das 2/2-Wegeventil 21 in die Absperrstellung geschaltet und das 2/2-Wegeventil 50 auf Durchgang geschaltet sind. Soll in dieser Betriebsphase kein Brühenzusatz eingespült werden, kann, wie erwähnt, die selbstansaugende Pumpe M über das auf Durchgang geschaltete 2/2-Wegeventil 21 und den Füllanschluss 6 und/oder den Rühranschluss 5 Flüssigkeit in den Brühetank 1 fördern, wobei dann beide Pumpen K, M zeitgleich betrieben sind. In beiden Fällen erhöht der zusätzliche Betrieb der selbstansaugenden Pumpe M die Befüllleistung.

Zum Ausführen der Sprühfunktion wird (nicht gezeigt) zumindest das 2/2-Wegeventil 52 auf Durchgang geschaltet, während das 2/2-Wegeventil 50 zweckmäßig in Sperrstellung gebracht wird. Zum Ausführen der Sprühfunktion ist nur die selbstansaugende Pumpe M verantwortlich, während die zeitgleich betriebene Kreiselpumpe K bei gegebenenfalls in die Sperrstellung gebrachtem 2/2-Wegeventil 30 über das auf Durchgang gestellte 2/2-Wegeventil 28 die gleichzeitige Rührfunktion ausführt.

Die Reinigungsfunktion bzw. kontinuierliche Innenreinigung im Brühetank 1 und gegebenenfalls im Leitungsnetz wird durch Schalten u.a. des 2/2-Wegeventils 26 auf Durchgang ausgeführt.

Eine Schnellentleerungsfunktion kann über die Kreiselpumpe K durch entsprechendes Umschalten zumindest des 3/3-Wegeventils 43 zum Entleeranschluss 44 ausgeführt werden.

## Patentansprüche

1. Flüssigkeits-Fördersystem (F) für eine Feldspritze, mit einer Kreiselpumpe (K) und einer selbstansaugenden Pumpe (M) zumindest zum Entlüften der Kreiselpumpe (K), wobei die beiden Pumpen (K, M) an ihren Saugseiten wahlweise mit einem Klarwasser-Sauganschluss (38) verbindbar und in ein Leitungsnetz eingegliedert sind, in welches über eine Steuerung (CU) betätigbare Ventile und zumindest wenigstens ein Brühetank (1), der Klarwasser-Sauganschluss (38), Sprühdüsen eines Sprühmoduls (54) und eine Brühenzusatz-Einspülschleuse (46) eingegliedert sind, wobei über die Steuerung zumindest eine Brühetank-Füllfunktion, eine Reinigungsfunktion, eine Einspülfunktion, eine Rührfunktion, eine Sprühfunktion, die Kreiselpumpen-Entlüftungsfunktion und gegebenenfalls eine Entleerungsfunktion einstellbar sind, und die Kreiselpumpen-Entlüftungs-, die Einspül- und die Sprühfunktionen jeweils im Betrieb der selbstansaugenden Pumpe (M) ausführbar sind, **dadurch gekennzeichnet, dass** die Reinigungs-, Brühetank-Füll-, Rühr- und gegebenenfalls die Entleerungs-Funktionen zumindest hauptsächlich mit Betrieb der Kreiselpumpe (K) ausführbar sind, und dass zumindest zur Ausführung der Sprühfunktion und der Rührfunktion beide Pumpen (K, M) zeitgleich betreibbar sind.

2. Flüssigkeits-Fördersystem nach Anspruch 1, **dadurch gekennzeichnet, dass** mit Betrieb der Kreiselpumpe (K) die Rührfunktion über ein zu einem Rühranschluss (5) im Brühetank (1) auf Durchgang gestelltes 2/2-Wegeventil (28) erst nach der über ein auf Durchgang gestelltes 2/2-Wegeventil (21) und ein auf Durchgang zu einem Füllanschluss (6) im Brühetank (1) gestelltes 2/2-Wegeventil (30) ausgeführten Brühetank-Füllfunktion ausführbar ist.

3. Flüssigkeits-Fördersystem nach Anspruch 1, **dadurch gekennzeichnet, dass** bei der über zwei auf Durchgang zu einem Füllanschluss (6) im Brühetank (1) gestellte 2/2-Wegeventile (21, 30) und bei der mit Flüssigkeit und Brühenzusatz aus einer Brühenzusatz-Einspülschleuse (46) mit einem in die Absperrstellung gestellten 2/2-Wegeventil (21) und einem in seine Durchgangsstellung zu einem Einspülanschluss (7) im Brühetank (1) gestellten 2/2-Wegeventil (50) ausgeführten Einspülfunktion beide Pumpen (K, M) gleichzeitig in Betrieb sind.

4. Flüssigkeits-Fördersystem nach Anspruch 1, **dadurch gekennzeichnet, dass** der Brühetank (1) bei gleichzeitigem Betrieb der beiden Pumpen (K, M) über ein auf Durchgang gestelltes 2/2-Wegeventil (21), ein auf Durchgang zu einem Füllanschluss (6) im Brühetank (1) gestelltes 2/2-Wegeventil (30) und ein auf Durchgang zu einem Rühranschluss (5) im Brühetank (1) gestelltes 2/2-Wegeventil (28) füllbar ist.

5. Flüssigkeits-Fördersystem nach Anspruch 1, **dadurch gekennzeichnet, dass** für die mit Klarwasser ausführbare Reinigungsfunktion oder eine kontinuierliche Innenreinigung des Leitungsnetzes, einschließlich des Brühetanks (1), und der Kreiselpumpe (K), ein in das Leitungsnetz integrierter, über die Kreiselpumpe (K) befüllbarer Klarwasser-Behälter (2) vorgesehen ist, und dass der Klarwasserbehälter (2) über ein 2/3-Wegeventil und ein auf Durchgang gestelltes 2/2-Wegeventil (28) mit einem Rühranschluss (5) im Brühetank (1) verbindbar ist..

6. Flüssigkeits-Fördersystem nach Anspruch 1, **dadurch gekennzeichnet, dass** die Kreiselpumpen-Entlüftungsfunktion eine anfängliche erste Phase mit Betrieb nur der selbstansaugenden Pumpe (M) und auf Durchgang von einem Klarwasser-Sauganschluss (38) zu einem Einfüllanschluss (6) im Brühetank (1) gestellten 2/2-Wegeventilen (21, 30) bis Erreichen einer vorbestimmten Flüssigkeitsmenge im Brühetank (1), und eine zweite nachfolgende Phase umfasst, mit gleichzeitigem Betrieb beider Pumpen (K, M) und Zirkulation aus dem und in den Brühetank (1) durch die Kreiselpumpe (K).

7. Flüssigkeits-Fördersystem nach Anspruch 6, **dadurch gekennzeichnet, dass** in der zweiten Phase zur weiteren Ergänzung der Flüssigkeitsmenge im Brühetank (1) ein Klarwassersauganschluss (38) über die selbst ansaugende Pumpe (M) und zwei auf Durchgang gestellte 2/2-Wegebentile (21), (30) mit einem Einfüllanschluss (6) im Brühetank (1) verbunden ist.

8. Flüssigkeits-Fördersystem nach Anspruch 1, **dadurch gekennzeichnet, dass** die selbstansaugende Pumpe (M) eine Kolbenmembranpumpe ist.

9. Flüssigkeits-Fördersystem nach Anspruch 8, **dadurch gekennzeichnet, dass** bei der selbstansaugende Pumpe (M) eine ein von der Druckseite der selbstansaugenden Pumpe (M) druckvorgesteuertes Druckbegrenzungsventil (24) enthaltende Umgehungsschleife (23) vorgesehen ist.

10. Flüssigkeits-Fördersystem nach wenigstens einem der vorhergehenden Ansprüche, **dadurch gekennzeichnet, dass** an den Saugseiten beider Pumpen (K, M) zumindest fünf 2/2-Wegeventile (17, 26, 28, 29, 30, 32) in Netzzweigen (13, 37, 18) zum Brühetank (1), zum Klarwasser-Behälter (2) und zur Einspühlschleuse (46) vorgesehen sind.

11. Flüssigkeits-Fördersystem nach Anspruch 10, **dadurch gekennzeichnet, dass** das 2/2-Wegeventil (28), das für die Rührfunktion auf Durchgang zum Rühranschluss (5) im Brühetank (1) stellbar ist, ein 2/2-Wege-Druckregelventil ist.

12. Flüssigkeits-Fördersystem nach wenigstens einem der vorhergehenden Ansprüche, **dadurch gekennzeichnet, dass** an den Saugseiten beider Pumpen (K, M) in Netzzweigen (13, 37, 18) zum Brühetank (1), zum Klarwasser-Behälter (2) und zum Klarwasser-Sauganschluss (38) zwei 2/3-Wegeventile (14, 36) und ein 2/2-Wegeventil (56) vorgesehen sind.

## Claims

1. Liquid delivery system (F) for a field sprayer, having a centrifugal pump (K) and having a self-priming pump (M) at least for venting the centrifugal pump (K), wherein the two pumps (K, M) are, on their suction sides, selectively connectable to a clear water suction connection (38) and are integrated into a line network into which valves, which are actuable via a controller (CU), and at least at least one stock tank (1), the clear water suction connection (38), spray nozzles of a spray module (54) and a stock additive induction sluice (46) are integrated, wherein at least one stock tank filling function, a cleaning function, an induction function, a stirring function, a spraying function, the centrifugal pump venting function and, if appropriate, an emptying function are settable via the controller, and the centrifugal plump venting, the induction and the spraying functions are each executable during the operation of the self-priming pump (M), **characterized in that** the cleaning, the stock tank filling, the stirring and, if appropriate, the emptying functions are at least mainly executable with operation of the centrifugal pump (K), and **in that**, at least for executing the spraying function and the stirring function, both pumps (K, M) are simultaneously operable.

2. Liquid delivery system according to Claim 1, **characterized in that**, with operation of the centrifugal pump (K), the stirring function is executable via a 2/2-way valve (28) set to through-passage with respect to a stirring connection (5) in the stock tank (1) only after the stock tank filling function, which is executed via a 2/2-way valve (21) set to through-passage and a 2/2-way valve (30) set to through-passage with respect to a filling connection (6) in the stock tank (1).

3. Liquid delivery system according to Claim 1, **characterized in that**, in the case of the induction function executed via two 2/2-way valves (21, 30) set to through-passage with respect to a filling connection (6) in the stock tank (1) and in the case of the induction function executed with liquid and stock additive from a stock additive induction sluice (46) by way of a 2/2-way valve (21) set to the shut-off position and a 2/2-way valve (50) set to its through-passage position with respect to an induction connection (7) in the stock tank (1), both pumps (K, M) are simultaneously in operation.

4. Liquid delivery system according to Claim 1, **characterized in that**, during simultaneous operation of the two pumps (K, M), the stock tank (1) is fillable via a 2/2-way valve (21) set to through-passage, a 2/2-way valve (30) set to through-passage with respect to a filling connection (6) in the stock tank (1) and a 2/2-way valve (28) set to through-passage with respect to a stirring connection (5) in the stock tank (1).

5. Liquid delivery system according to Claim 1, **characterized in that**, for the cleaning function, which is executable with clear water, or a continuous internal cleaning of the line network, including the stock tank (1), and the centrifugal pump (K), provision is made of a clear water container (2), which is integrated into the line network and which is fillable via the centrifugal pump (K), and **in that** the clear water container (2) is connectable to a stirring connection (5) in the stock tank (1) via a 2/3-way valve and a 2/2-way valve (28) set to through-passage.

6. Liquid delivery system according to Claim 1, **characterized in that** the centrifugal pump venting function comprises a starting first phase with operation only of the self-priming pump (M) and with 2/2-way valves (21, 30) set to through-passage from a clear water suction connection (38) with respect to an induction connection (6) in the stock tank (1) until a predetermined quantity of liquid in the stock tank (1) is attained, and a second subsequent phase with simultaneous operation of both pumps (K, M) and circulation out of and into the stock tank (1) by way of the centrifugal pump (K).

7. Liquid delivery system according to Claim 6, **characterized in that**, in the second phase, for further supplementation of the quantity of liquid in the stock tank (1), a clear water suction connection (38) is connected to a filling connection (6) in the stock tank (1) via the self-priming pump (M) and two 2/2-way valves (21), (30) set to through-passage.

8. Liquid delivery system according to Claim 1, **characterized in that** the self-priming pump (M) is a piston diaphragm pump.

9. Liquid delivery system according to Claim 8, **characterized in that**, at the self-priming pump (M), provision is made of a bypass loop (23) which contains a pressure-limiting valve (24) that is pressure-pilot-controlled from the pressure side of the self-priming pump (M).

10. Liquid delivery system according to at least one of the preceding claims, **characterized in that**, on the suction sides of both pumps (K, M), provision is made of at least five 2/2-way valves (17, 26, 28, 29, 30, 32) in network branches (13, 37, 18) to the stock tank (1), to the clear water container (2), and to the induction sluice (46).

11. Liquid delivery system according to Claim 10, **characterized in that** the 2/2-way valve (28), which, for the stirring function, is settable to through-passage with respect to the stirring connection (5) in the stock tank (1), is a 2/2-way pressure regulation valve.

12. Liquid delivery system according to at least one of the preceding claims, **characterized in that**, on the suction sides of both pumps (K, M), provision is made of two 2/3-way valves (14, 36) and one 2/2-way valve (56) in network branches (13, 37, 18) to the stock tank (1), to the clear water container (2) and to the clear water suction connection (38).

## Revendications

1. Système de transport de liquides (F) pour un pulvérisateur agricole, comprenant une pompe centrifuge (K) et une pompe auto-aspirante (M) au moins pour désaérer la pompe centrifuge (K), les deux pompes (K, M) pouvant être raccordées au niveau de leurs côtés d'aspiration de manière sélective à un raccord d'aspiration d'eau claire (38) et étant intégrées dans un réseau de conduites dans lequel sont intégrés des soupapes actionnables par le biais d'une commande (CU) et au moins une cuve de bouillon (1), le raccord d'aspiration d'eau claire (38), des buses de pulvérisation d'un module de pulvérisation (54) et un bac de mélange d'ajout de bouillon (46), la commande permettant d'ajuster au moins une fonction de remplissage de la cuve de bouillon, une fonction de nettoyage, une fonction de mélange, une fonction d'agitation, une fonction de pulvérisation, la fonction de désaérage de la pompe centrifuge, et éventuellement une fonction de vidange, et les fonctions de désaérage de la pompe centrifuge, de mélange et de pulvérisation pouvant à chaque fois être réalisées pendant le fonctionnement de la pompe auto-aspirante (M), **caractérisé en ce que** les fonctions de nettoyage, de remplissage de la cuve de bouillon, d'agitation et éventuellement de vidange peuvent être réalisées au moins principalement pendant le fonctionnement de la pompe centrifuge (M), et **en ce qu'**au moins pour réaliser la fonction de pulvérisation et la fonction d'agitation, les deux pompes (K, M) peuvent fonctionner en même temps.

2. Système de transport de liquides selon la revendication 1, **caractérisé en ce que** pendant le fonctionnement de la pompe centrifuge (K), la fonction d'agitation peut être réalisée par le biais d'une soupape à 2/2 voies (28) ouverte vers un raccord d'agitation (5) dans la cuve de bouillon (1), seulement après la réalisation de la fonction de remplissage de la cuve de bouillon par le biais d'une soupape à 2/2 voies (21) ouverte et d'une soupape à 2/2 voies (30) ouverte vers un raccord de remplissage (6) dans la cuve de bouillon (1).

3. Système de transport de liquides selon la revendication 1, **caractérisé en ce que** dans le cas de la fonction de remplissage réalisée par le biais de deux soupapes à 2/2 voies (21, 30) ouvertes vers un raccord de remplissage (6) dans la cuve de bouillon (1) et dans le cas de la fonction de remplissage réalisée avec du liquide et un ajout de bouillon provenant d'un bac de mélange d'ajout de bouillon (46) avec une soupape à 2/2 voies (21) en position de blocage et une soupape à 2/2 voies (50) dans sa position de passage vers un raccord de mélange (7) dans la cuve de bouillon (1), les deux pompes (K, M) fonctionnent simultanément.

4. Système de transport de liquides selon la revendication 1, **caractérisé en ce que** la cuve de bouillon (1) peut être remplie lors du fonctionnement simultané des deux pompes (K, M) par le biais d'une soupape à 2/2 voies (21) ouverte, d'une soupape à 2/2 voies (30) ouverte vers un raccord de remplissage (6) dans la cuve de bouillon (1) et d'une soupape à 2/2 voies (28) ouverte vers un raccord d'agitation (5) dans la cuve de bouillon (1).

5. Système de transport de liquides selon la revendication 1, **caractérisé en ce que** pour la fonction de nettoyage pouvant être réalisée avec de l'eau claire, ou pour un nettoyage interne en continu du réseau de conduites, incluant la cuve de bouillon (1) et la pompe centrifuge (K), il est prévu un réservoir d'eau claire (2) intégré dans le réseau de conduites, pouvant être rempli par le biais de la pompe centrifuge (K), et **en ce que** le réservoir d'eau claire (2) peut être raccordé à un raccord d'agitation (5) dans la cuve de bouillon (1) par le biais d'une soupape à 2/3 voies et d'une soupape à 2/2 voies (28) ouverte.

6. Système de transport de liquides selon la revendication 1, **caractérisé en ce que** la fonction de désaérage de la pompe centrifuge comprend une première phase initiale avec un fonctionnement uniquement de la pompe auto-aspirante (M) et de soupapes à 2/2 voies (21, 30) ouverte depuis un raccord d'aspiration d'eau claire (38) vers un raccord de remplissage (6) dans la cuve de bouillon (1) jusqu'à l'obtention d'une quantité de liquide prédéfinie dans la cuve de bouillon (1), et une deuxième phase subséquente avec un fonctionnement simultané des deux pompes (K, M) et une circulation depuis et dans la cuve de bouillon (1) par la pompe centrifuge (K).

7. Système de transport de liquides selon la revendication 6, **caractérisé en ce que** dans la deuxième phase, en vue d'un complément supplémentaire de la quantité de liquide dans la cuve de bouillon (1), un raccord d'aspiration d'eau claire (38) est raccordé à un raccord de remplissage (6) dans la cuve de bouillon (1) par le biais de la pompe auto-aspirante (M) et de deux soupapes à 2/2 voies (21), (30) ouvertes.

8. Système de transport de liquides selon la revendication 1, **caractérisé en ce que** la pompe auto-aspirante (M) est une pompe à membrane à piston.

9. Système de transport de liquides selon la revendication 8, **caractérisé en ce que** dans le cas de la pompe auto-aspirante (M), il est prévu une boucle de contournement (23) contenant une soupape de limitation de la pression (24) pilotée en pression du coté refoulement de la pompe auto-aspirante (M).

10. Système de transport de liquides selon au moins l'une des revendications précédentes, **caractérisé en ce qu'**au niveau des côtés d'aspiration des deux pompes (K, M), au moins cinq soupapes à 2/2 voies (17, 26, 28, 29, 30, 32) sont prévues dans des branches du réseau (13, 37, 18) vers la cuve de bouillon (1), vers le réservoir d'eau claire (2) et vers le bac de mélange (46).

11. Système de transport de liquides selon la revendication 10, **caractérisé en ce que** la soupape à 2/2 voies (28) qui peut être ouverte vers le raccord d'agitation (5) dans la cuve de bouillon (1) pour la fonction d'agitation, est une soupape de régulation de pression à 2/2 voies.

12. Système de transport de liquides selon au moins l'une des revendications précédentes, **caractérisé en ce qu'**au niveau des côtés d'aspiration des deux pompes (K, M) dans des branches de réseau (13, 37, 18) vers la cuve de bouillon (1), vers le réservoir d'eau claire (2) et vers le raccord d'aspiration d'eau claire (38), sont prévues deux soupape à 2/3 voies (14, 36) et une soupape à 2/2 voies (56).
